# EUROPEAN PATENT SPECIFICATION

(11) **EP 1 410 646 B1**
(45) Date of publication and mention of the grant of the patent: **12.08.2009**
(21) Application number: 00972294.3
(22) Date of filing: 20.10.2000
(51) Int. Cl.: H04N 7/58, H04N 7/24

(54) **METHOD AND APPARATUS FOR INSERTING DIGITAL MEDIA ADVERTISEMENTS INTO STATISTICAL MULTIPLEXED STREAMS**
VERFAHREN UND VORRICHTUNG ZUM EINFÜGEN DIGITALER MEDIENANZEIGEN IN STATISTISCHE GEMULTIPLEXTE STRÖME
METHODE ET DISPOSITIF PERMETTANT D'INSERER DES PUBLICITES MEDIAS NUMERIQUES DANS DES CHAINES A MULTIPLEXAGE ASYNCHRONE

(30) Priority: 20.10.1999 US 160549 P
(43) Date of publication of application: 21.04.2004
(73) Proprietor: SAMSUNG ELECTRONICS CO., LTD., Suwon-si, Gyeonggi-do 442-742 (KR)
(72) Inventor: HAMILTON, Jeffrey, S., Doylestown, PA 18901 (US)
(74) Representative: Walaski, Jan Filip
(86) International application number: PCT/US2000/029034
(87) International publication number: WO 2001/030086

(56) References cited:
- EP-A- 0 739 138
- EP-A- 0 944 249
- WO-A-98/44737
- WO-A-99/39506
- US-A- 5 534 944
- US-A- 5 886 731
- US-A- 5 917 830

## Description

### Background of the Invention.

The transition to digital video allows video programming to be transmitted in a digital format through satellite systems, cable systems, and over the air broadcast systems. Digital compression, and in particular, the Motion Pictures Expert Group (MPEG) Standard allows for multiple digital programs to be carried in a section of spectrum which previously could only carry one analog program. Typically, the 6 MHz wide channel which carried one analog program can carry six to ten digitally encoded and compressed programs.

As part of the digital transmission process, multiple programs are statistically multiplexed such that the bit rate requirements for each program are met and when programs do not have a high bit rate requirement, other programs can use the available bandwidth. As an example, when a football game is statistically multiplexed with a talk show, the football game will be allocated sufficient bandwidth to permit accurate representation of the play on the field and the motion of the players. The talk show program will be allocated a minimum amount of bandwidth such that the people appearing on the program can be seen clearly. However, in an instance when there is motion in the talk show program as may be the case when the participants on the talk show begin to hurl chairs at one another, the multiplexing process will allocate additional bandwidth to the talk show and in the event that there is a minimum bandwidth requirement in the football game, that bandwidth will be allocated from the football game to the talk show. Clearly, when there are multiple programs, bandwidth can be allocated among all the programs such that the motion can be accurately represented in each program and the overall statistically multiplexed stream optimized.

Several problems arise in statistically multiplexed programs including the difficulty in separating programs and substituting provisional programming. As an example, at a re-transmission point such as a cable television local head end it becomes difficult to remove one program from the statistically multiplexed stream and insert another program. This difficulty arises from the fact that the bandwidth of the program is varying constantly according to the bandwidth tradeoffs achieved by the statistical multiplexing equipment at the origin point.

Another difficulty is the insertion of advertisements into the statistically multiplexed streams. Because the bandwidth of each program is varying, an original advertisement inserted into the program stream at the origin point will have a time varying bandwidth. Inserting another advertisement at the re-transmission point is not readily facilitated in existing systems and equipment because the bandwidth is varying and in some cases not easily discernible by the equipment at the re-transmission point. Because local advertisement insertion is an important part of many broadcast services and generates significant revenue, it is necessary to be able to remove the initial advertisements, which are part of the program stream and substitute new advertisements.

Patent Number 5,715,018 entitled "Digital Advertisement Insertion system" issued on February 3, 1998, provides means for digitizing, compressing and storing analog/audio video source information; and decompressing the information to regenerate an analog signal. A method based on this patent includes receiving motion video information from an analog source; digitizing, compressing and storing the received motion video information in a computer data file such that upon decompression, broadcast quality motion video information is obtained; selecting and editing at least a portion of the stored motion video information; decompressing the selected and edited portion of the stored motion video information to obtain broadcast quality motion; and regenerating an analog signal from the selected and edited portion of the stored motion video information; inserting the regenerated analog signal in place of a broadcast signal on a channel at a predetermined time; and providing synchronization of the regenerated analog signal to the broadcast signal.

An apparatus based on this patent includes means for inserting a signal representing motion video information in place of a broadcast signal on a broadcast channel at a predetermined time, and wherein the broadcast channel transmits the motion video information at a field per second rate; means for providing synchronization of the signal representing motion video information to the broadcast signal; a randomly-accessible computer-readable medium for digitally storing in a data file compressed image data for a sequence of digital still images, including an image corresponding to each field of the motion video information to be transmitted in the broadcast channel, such that upon decompression, broadcast quality motion video information is obtained; and a computer including means for editing the sequence of digital still images, means for accessing the sequence at the predetermined time, for decompressing the sequence to obtain broadcast quality motion video information and for generating the signal to be inserted into the broadcast channel from the accessed sequence.

U.S. Patent Number 5,600,366 entitled "Methods and Apparatus for Digital Advertisement Insertion in Video Programming", issued on February 4, 1997 permits timely and correct switchovers from network programming to local advertising in ways which occur smoothly without disruption in perception to the viewer. Switchovers occur at packet or frame boundaries and are designed to occur upon detection of idle information from a network source. An apparatus based on this patent includes means for receiving externally supplied programming comprising analog video information and embedded tone cues including a pre-roll cue and a roll cue, detecting said tone cues and converting the analog video information to digital video information; means for activating digital video storage in response to one of said tone cues preparatory to initiating playback; and means for initiating playback from said storage in response to detecting an idle condition from said digital video information.

Another apparatus based on this patent includes means for receiving externally supplied programming from a plurality of sources, each source providing programming comprising analog video information and embedded tone cues, and for converting the analog video information to digital video information; storage means for storing a plurality of local programs; common means for monitoring all of said sources to detect one or more tone cues from a source and for preparing said storage means for playback of respective one or more of said local programs to be substituted for said externally supplied programming from a source sending at least one of said one or more tone cues; and means for initiating playback from said storage means of respective one or more of said local programs to be substituted for said externally supplied programming from a source in response to detecting an idle condition from said digital video information of said source.

A method based on this patent includes receiving externally supplied programming comprising analog video information and embedded tone cues including a pre-roll cue and a roll cue, detecting said tone cues and converting the analog video information to digital video information; activating video storage in response to one of said tone cues preparatory to initiating playback; and initiating playback from said recorder in response to detecting an idle condition from said digital video information.

Another method based on this patent includes receiving local digital video programming and providing it to a user; receiving externally supplied analog video programming and embedded tone cues including a return to network cue, detecting said return to network cue; converting said analog video programming to digital video information upon receipt of said return to network cue; and terminating operation of video storage in response to detection of an idle condition in said local digital video programming.

U.S. Patent Number 5,956,088 entitled "Method and Apparatus for Modifying Encoded Digital Video for Improved Channel Utilization" issued on September 21, 1999 and U.S. Patent Number 5,862,140 entitled "Method and Apparatus for multiplexing Video Programs for Improved Channel Utilization" issued on January 19, 1999 both provide a method (and apparatus) for increasing channel utilization for a data channel transmitting a multiplex of a set of one or more encoded program streams. Each program stream in said set being decodable by a corresponding decoder. Each corresponding decoder including a corresponding decoder buffer, the decoder buffers having a maximum allowable size. The method comprising selecting encoded pictures to be modified, said selecting according to a criterion, which includes preventing any underflow of any decoder buffer, modifying each said selected encoded picture to form a corresponding modified encoded picture, said modified encoded picture having less data than said selected encoded picture, and transmitting the corresponding modified encoded pictures through the channel in place of the selected encoded pictures. In one embodiment of these patents, modifying deletes each selected encoded picture. In another embodiment of the patents, where the encoded program streams include predictively encoded pictures, selecting selects predictively encoded pictures that are not anchor pictures, and modifying deletes the prediction error data from each said selected encoded picture.

In a further embodiment of these patents, one or more additional data channels are used to send augmentation information. The augmentation information can be used by specially equipped receivers to correct the impairments that would normally occur when decoding the modified signal received from the data channel. In yet another embodiment of the patent, augmentation information is sent using the same data channel that is used to transmit the modified pictures. In this case, the information that is removed by modifying is transmitted before it is needed for decoding and at a time when the data channel is not fully utilized. Certain receivers equipped with sufficient storage can receive and store the augmentation information until it is needed. Alternatively, if the additional storage is used to insert additional delay between the time that data is received and the time that data is decoded, then the augmentation information can be sent after it would be needed by a conventional receiver.

A system of these patents comprise primary and overflow demodulators configured to demodulate data from the primary and overflow channels, respectively; a first demultiplexer, coupled to the primary demodulator, configured to extract a primary packet stream from an output of the primary demodulator; a second demultiplexer, coupled to the overflow demodulator, configured to extract an overflow packet stream from an output of the overflow demodulator; a buffer coupled to the second demultiplexer; a time stamp comparator, coupled to the first demultiplexer and the buffer, configured to compare a time stamp associated with a next packet from the primary packet stream with a time stamp associated with a next packet from the overflow packet stream; and a packet multiplexer, coupled to the first demultiplexer, the buffer and the time stamp comparator, configured to select one of the next packets from the primary packet stream and the overflow packet stream in response to a comparison made by the time stamp comparator.

U.S. Patent Number 5,029,014 entitled "Ad Insertion System and Method for Broadcasting Spot Messages Out of Recorded Sequence", issued on July 2, 1991, provides an advertisement insertion system and method transmit spot messages during intervals in a broadcast transmission and provide immediate access to stored spot messages, in any sequential order, with a single video source. Custom spot messages can be created by superimposing graphics over selected video signals and simultaneously transmitting those signals with appropriate audio signals.

A system of this patent comprises a first playing means for playing spot messages stored in a recorded sequence on a video source, and control means for switching a broadcast system from program signals of a scheduled broadcast, selecting and causing said first playing means to play into said broadcast system in immediate succession a plurality of spot messages out of said recorded sequence without intervening material from another playing means, and switching said broadcast system back to program signals of a scheduled broadcast.

A method of this patent comprises selecting video, audio and/or graphic signals to form custom spot messages; accessing the selected video signals on a laser disk; accessing selected audio signals which are to be simultaneously broadcast with said accessed video signals; and switching from broadcast transmission to spot message transmission to co-broadcast said accessed video and audio signals as said spot messages with an audio component according to a programmed time schedule and out of a pre-recorded sequence of spot messages on said laser disk.

U.S. Patent Number 5,966,120, entitled "Method and Apparatus for Combining and Distributing Data with Pre-formatted Real-time Video", issued on October 12, 1999, relates to providing constant bit rate distribution of variable bit rate-encoded video programs, along with Auxiliary Data of a general character, to one or more receivers. At a particular receiver, a customized augmented video program is created by inserting selected portions of the Auxiliary Data into a selected encoded video program. The encoded video portion of the augmented video program can be transmitted, decoded and displayed in real time, while the Auxiliary Data need not be transmitted in real time but can be stored locally at the receiver for real-time presentation at a later time. Real time presentation might include insertion into the video program while non real-time presentation might include insertion into non-video applications separate from the video program.

A method of this patent comprises the steps of receiving the primary data stream; detecting fill data in the primary data stream; inserting an auxiliary data stream in place of the fill data; and adding location data for the programs and for the auxiliary data; to form a modified data stream for distribution to a plurality of receivers configured for individually extracting selected portions of the modified data stream in accordance with the location data.

Another method of this patent comprises the steps of statistically multiplexing a plurality of encoded video programs; monitoring the statistically multiplexed encoded video programs for the occurrence of a fill packet; maintaining a buffer of auxiliary data segments; replacing the fill packet with at least one segment of the auxiliary data stream from the buffer if the segment is smaller than the size of the fill packet; adding location data for the encoded video programs and for the auxiliary data; to form a modified data stream for distribution to a plurality of receivers configured for individually extracting selected portions of the modified data stream in accordance with the location data.

A system of this patent comprises a program multiplexer for statistically multiplexing a plurality of encoded video programs to the modified data stream; a data insertion controller coupled to receive a multiplexed program stream from the program multiplexer and for inserting auxiliary data therein to yield a modified data stream; and a program map insertion controller coupled to receive the modified data stream for adding location data for the encoded video programs and for the auxiliary data to the modified data stream.

Another system comprises a multiplexer for statistically multiplexing a plurality of encoded video programs; a first controller for adding auxiliary data to the output of the multiplexer; a second controller for adding location data for the encoded video programs and for the auxiliary data to the output of the first controller, thereby forming a modified data stream; a distribution channel for distributing the modified data stream to at least one receiver; a processor for determining location data from the distributed modified data stream; a first demultiplexer for selecting an encoded video program from the modified data stream in accordance with a first predetermined characteristic of the processor and the location data; a second demultiplexer for selecting local auxiliary data from the modified data stream in accordance with a second predetermined characteristic of the processor and the location data; a storage device for storing the local auxiliary data from the second demultiplexer; and an augmentation unit for associating the encoded video program and the stored local auxiliary data to form a receiver-specific augmented video program for decoding and display.

European Patent Application EP-A-0944249 describes a stream splicing device, for splicing a commercial with a transmission stream, the commercial taking the place of a previous commercial transmitted as part of the transmission stream.

European Patent Application EP-A-0739138 describes a system for matching compressed video signals to the bit rate of a communications channel.

International Patent Application WO 99/39506 describes a system for inserting commercials into an audiovisual bit stream by making use of cue commands signifying the start and end of the insertion points.

According to an aspect of the present invention, there is provided a method of inserting digital media advertisements into a multiplexed digital transmission stream according to claim 1.

According to a further aspect of the present invention, there is provided a system for inserting a digital media advertisement into a multiplexed digital transmission stream according to claim 12.

According to another aspect of the present invention there is provided a system and method for computing rate profiles associated with the multiplexed program streams. The rate profiles may be used for inserting local advertisements and allowing substitution of original advertisements or other programming with inserted advertisements. In one embodiment, a predetermined bit rate profile is specified for the compression of an advertisement with the specification extending from the start point of the advertisement to the end point. The digital media advertisement is compressed according to the specified profile and inserted into the advertising opportunity.

The predetermined bit profile may comprise a maximum bit rate, a maximum bit rate and a minimum bit rate, a minimum or maximum number of bits over the avail or a subset or portion of the avail, or a time varying profile defined from the start point to the end point. The profile may be modelled as a piecewise linear model, allowing bandwidth to change at specified moments during the advertisement.

The specified predetermined bit rate profile may comprise only a minimum bit rate and null packets may be inserted to make up the difference between the minimum bit rate and the actual bit rate which occurs in the statistically multiplexed stream.

In a statistically multiplexed stream where there are multiple programs with varying bit rates for each program, multiple bit rate profiles may be defined such that each advertising opportunity has a specific bit rate profile defined for it. The individual rate profiles may be defined such that the sum of all the profiles is equal to the maximum allowed bit rate in the statistically multiplexed stream during the advertisement. The predetermined bit rate profile for the stream may specify the instantaneous sum of the first bit rate profile and the second bit rate profile or may simply define the total number of bits from the start point to the end point of the first bit rate profile summed with the second bit rate profile.

In inserting advertisements in various multiplexed program streams, it is possible to create the bit rate profiles for the individual advertisements such that they are complementary. That is, the high bandwidth portions of the first bit rate profile correspond to the low bandwidth portions of the second bit rate profile. This method can be extended across multiple profiles such that high bandwidth portions of an advertisement correspond with at least one low bandwidth portion in another program stream, thus allowing for multiple simultaneous high bandwidth portions of advertisements. Alternatively, high bandwidth portions of advertisements may be staggered in a predetermined manner such that ads are allowed to have sections of high motion or other high bandwidth requirements but that these portions do not occur simultaneously.

These and other features and objects of the invention will be more fully understood from the following detailed description of the preferred embodiments, which should be read in light of the accompanying drawings.

### Brief Description of the Drawings

The accompanying drawings, which are incorporated in and form a part of the specification, illustrate the embodiments of the present invention and, together with the description serve to explain the principles of the invention.

In the drawings:
FIG. 1 is a block diagram illustrating an exemplary processing associated with the generation of statistically multiplexed streams;
FIGS. 2A and 2B illustrate the time varying bit rates for an incoming program stream and an outgoing stream with inserts respectively;
FIGS. 3A and 3B illustrate the time varying bit rates for two statistically multiplexed streams having complementary advertisement avails;
FIGS. 4A-4C illustrate staggered avail profiles for three simultaneous multiplexed streams;
FIG. 5 illustrates two profiles having coarse granularity and fine granularity respectively; and
FIG. 6 illustrates monitoring of the total number of bits during the avails.

### Detailed Description of the Preferred Embodiment

In describing a preferred embodiment of the invention illustrated in the drawings, specific terminology will be used for the sake of clarity. However, the invention is not intended to be limited to the specific terms so selected, and it is to be understood that each specific term includes all technical equivalents which operate in a similar manner to accomplish a similar purpose.

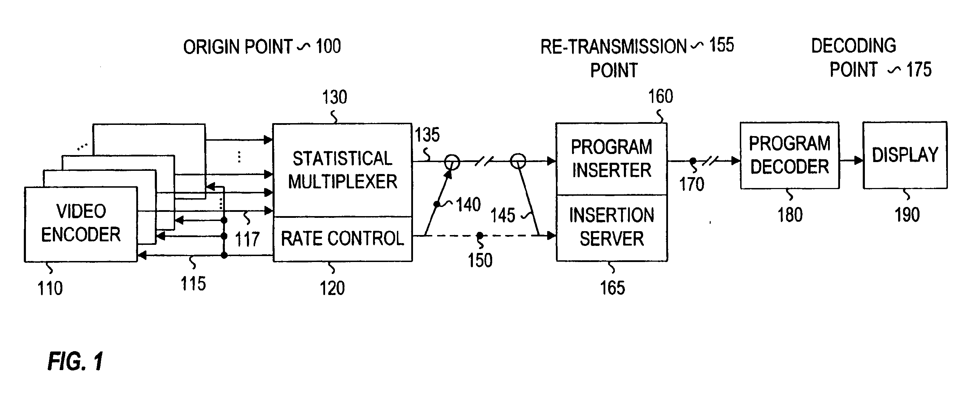

With reference to the drawings, in general, and FIGS. 1 through 6 in particular, the system and method of the present invention is disclosed.

FIG. 1 illustrates an exemplary processing associated with the generation of statistically multiplexed program streams. As illustrated, each video encoder 110 produces a video programming stream 117 which is received by the statmux 130. The statmux 130 includes a rate control unit 120, which provides a rate control signal 115 to each video encoder 110. This rate control signal 115 is used by the video encoder 110 to compress the programming according to the requirements of the statmux 130. The statmux 130 acts to control the total bandwidth utilized by the multiple video encoders 110. The actual number of video encoders will be determined by the amount of bandwidth available to the statistical multiplexer 130.

The origin point 100 for the video may be a studio location, a satellite uplink location, a cable centralized transmission point, in-home server, or other video origin point.

Once the statmux 130 creates a statistical multiplexed stream 135, it is transmitted to the re-transmission point 155. Rate control information may be transmitted as part of the statistically multiplexed stream 135 through use of an inserted rate control signal 140 which is combined with the programming. Alternatively, the rate control information may be transmitted as a separate rate control signal 150 that may be reinserted through use of a rate control reinsertion signal 145. In another embodiment, rate control information may be transmitted only as MPEG video rate parameters.

The re-transmission point 155 may comprise a cable television head end, a satellite downlink receiver, or can even be home equipment such as a television set top, personal computer, or other equipment, which receives the statistically multiplexed stream 135.

At the re-transmission point 155, a program inserter 160 works in conjunction with an insertion server 165 to reform the program streams with substituted advertisements. This new program stream comprises the outgoing program stream multiplex 170. The outgoing program stream multiplex 170 is received by a decoding point 175 that includes a program decoder 180, which decodes the digital video stream and presents it to a display unit 190. In one embodiment, the program decoder comprises an MPEG decoder and is coupled to a television which acts as display 190. In another embodiment, the program decoder 180 comprises another type of digital video decompression system and is coupled to a personal computer or other display device.

From a business perspective, the fact that advertisements have been inserted into what are termed "ad avails" creates difficulty at the re-transmission point 155 because the advertisement may not be suitable for the viewers in that geographic area, the service provider may be able to receive more revenue by substituting the original advertisement with a new advertisement. As an example, it may be desirable for a cable operator to replace a nationally broadcast advertisement with a local advertisement for a restaurant, car dealership, or other locally provided service. If the cable operator had permission to substitute the ads, they will want to remove the original advertisement from the programming stream and substitute the local advertisement. The term "ad avail" refers to any available spot for advertising which may be filled with an original advertisement or a blank spot in the programming. Alternatively, it may be possible to interrupt the program stream and insert an advertisement where there was no original advertisement. In this case, the "ad avail" becomes created although it did not originally exist.

The rate control signal 115 may contain rate control information as well as insertion timing information to enable program and advertisement insertion at re-transmission points 155. The information which may be included consists of the minimum or actual rate during the avails as determined by predefined rate profiles, or the actual rate profile of the upcoming avail in predefined or specified time units. The rate control signal 115 may indicate a fixed minimum rate which may be different during each ad avail and/or the total number of bits, bites, packets, or other measurable units in the ad avail.

The separate rate control signal 150 as illustrated in FIG. 1 serves as a means of delivery for rate information and can include prearrangement by any means including e-mail, written or verbal specifications, or templates designated by a standards body, or an actual out-of-band or out-of-multiplex transmission which represents the specific rate control information.

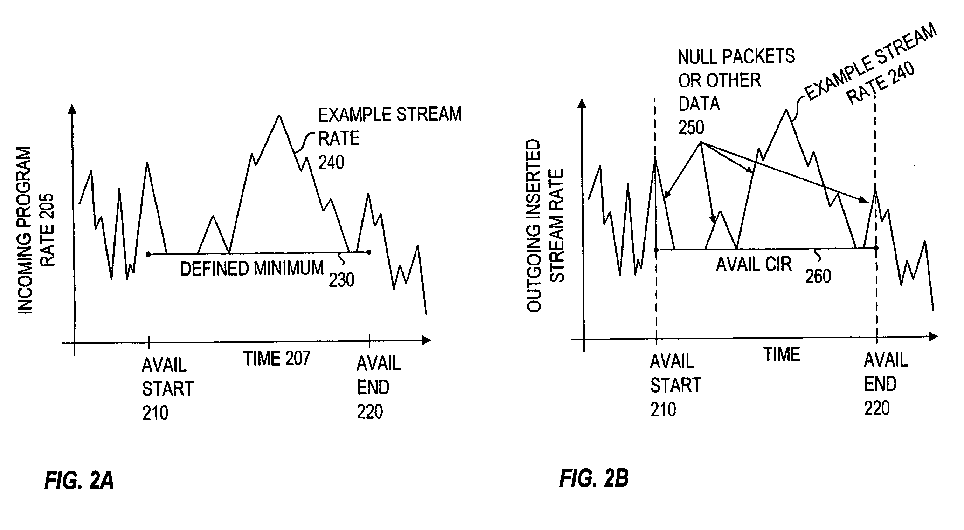

FIG. 2A illustrates time varying bits associated with an incoming program stream. Incoming program rate 205 is drawn on Y axis and time 207 is drawn on X axis. The illustration of the incoming program rate 205 as compared to function of the time 207, illustrates that a defined minimum 230 over a predetermined period of time may be determined. The predetermined time period may have an associated avail start 210, avail end 220, and an example rate 240. Thus, the incoming program stream has a bit rate which varies and exceeds the defined minimum 230 for the avail having avail start 210 and avail end 220. Thus, the underlined program may actually utilize more bandwidth than the avail, but the avail will be assigned the minimum defined bandwidth 230.

FIG. 2B illustrates the time varying bit rates for an outgoing stream. FIG. 2B further illustrates an avail committed information rate (CIR) 260 which is the minimum bit rate that will be guaranteed for use for the insertion of the advertisement in the avail. As shown in FIG. 2B, one or more null packets 250 can be inserted to make up the difference between the CIR 260 and the actual bit rate as defined by the example stream 240.

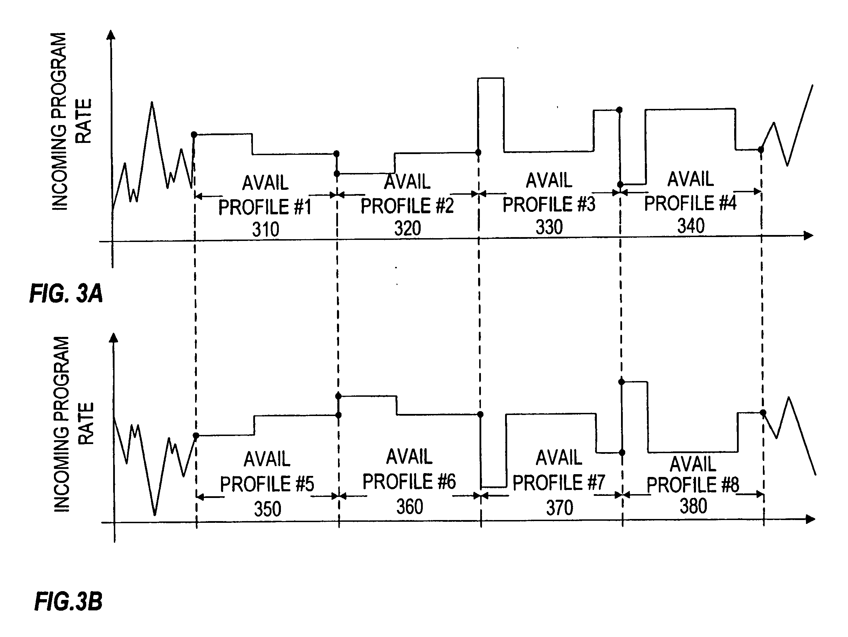

For exemplary purposes, FIGS. 3A and 3B illustrate exemplary statistically multiplexed streams having predefined avail rate profiles. FIG. 3A represents a first stream in a multiplex, and FIG. 3B represents a second and simultaneous stream in the same multiplex. As illustrated in FIGS. 3A and 3B, a number of avail profiles are specified including avail profile #1 (310); avail profile #2 (320); avail profile #3 (330); avail profile #4 (340); avail profile #5 (350); avail profile #6 (360); avail profile #7 (370); and avail profile #8 (380). As illustrated, avail profile #1 (310) may be complementary to avail profile #5 (350) in that these avail profiles occur simultaneously in the multiplexed stream. This may be the case when the advertisements are synchronous such that the start times are equal or nearly equal and the end times are equal or nearly equal. In such a case it is possible to define the avail profiles such that they complement each other to allow for a defined rate for multiple simultaneous profiles in a single multiplex wherein high bandwidth requirements are permitted at a time in avail profile #1 (310) which is complementary to the high bandwidth requirement time in avail profile #5 (350).

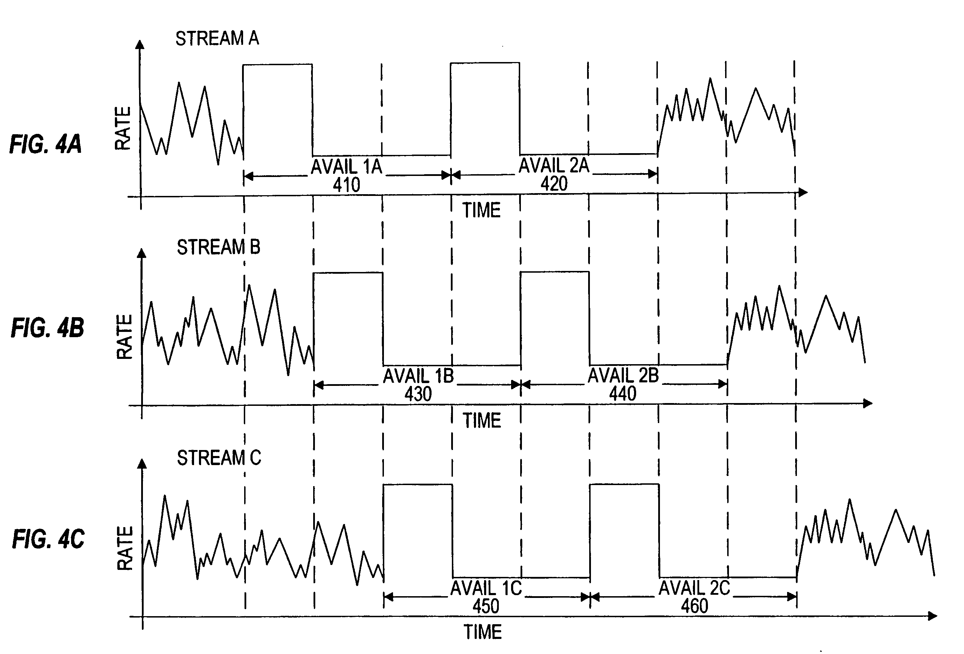

FIGS. 4A-4C represent avails in three program streams in a multiplexed signal. As shown, several avails are defined including avail 1A 410, avail 2A 420, avail 1B 430, avail 2B 440, avail 1C 450 and avail 2C 460. The profiles for these avails are defined such that the high bandwidth times are staggered.

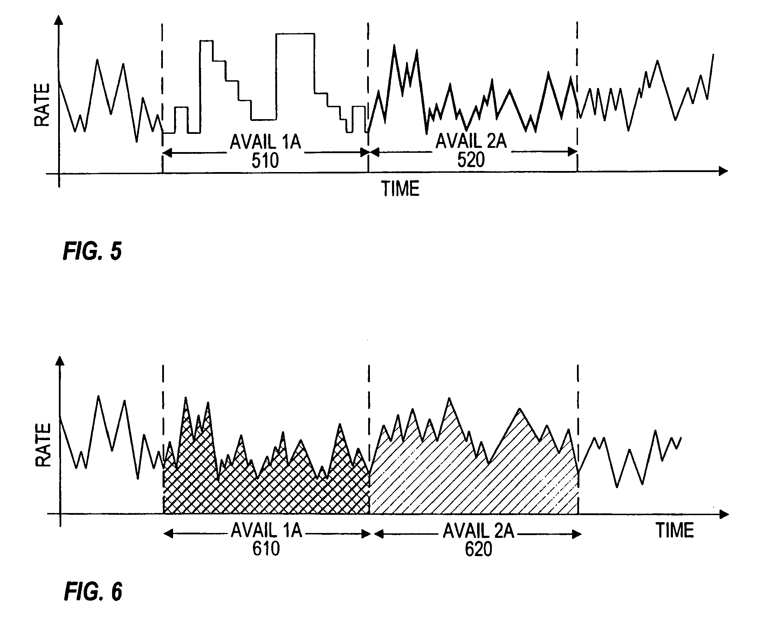

FIG. 5 illustrates custom profiles including avail 1A 510 and avail 2A 520 with profiles defined such that avail 1A has a coarse custom profile with the bit rate varying over time substantially. Avail 2A 520 has a fine time granularity for definition of the rate such that the defined bit rate may vary dramatically over a period as short as a second or several milliseconds. This method allows for the bandwidth in the statistically multiplexed stream to be utilized optimally such that when the initial advertisement is removed the inserted advertisement has a bit rate which matches that of the original advertisement closely.

FIG. 6 illustrates monitoring of avail 1A 610 and avail 2A 620 such that the total number of bits, packets, or other digital measurement is calculated. This can be visualized as the area under the rate curve. By specifying the total number of bits, short avails can be defined and streams can be defined for decoders with large buffers.

It is to be noted that a typical MPEG buffer has a latency of less than 1 second. Thus, the sections of video must be delivered and used within that time. However, the decoders with larger buffers, as may be included in equipment with large amounts of memory, such as set top devices, may define a 30 second latency and allow bits to be delivered at any time in the 30 second window. Such large buffers can provide additional flexibility in advertisement insertion. One way in which a large buffer can be used is by using the memory to buffer the video stream of the avail, allowing low bit rate delivery of high bit rate ads, and inserting the ads at the appropriate moment. Thus, although the statistically multiplexed video stream may not be capable of transporting a high bit rate advertisement for real time display, the system may receive the advertisement over a period of several seconds and subsequently display the high bit rate advertisement.

The extensions of the techniques disclosed herein can be utilized and include concepts such as profiling of avails which includes profiling of portions of the pre-advertisement and post-advertisement content. For example, by profiling the start/end of television shows it becomes possible to allow higher bit rate and/or higher quality advertisements, based on the occurrence of low bit rate segments of television programming in adjacent channels. When the start/end of programming in an adjacent channel results in a low bit rate and the avail overlaps this start/end segment, the bandwidth from the programming can be used for the avail. For example, ads on channel 2 can benefit from rolling credits on channel 3 at the end of the show on channel 3 when the end time of the programs on channels 2 and 3 are staggered, as frequently occurs.

Another technique which can be utilized as part of the present invention is blind profiling, in which no external rate information other than the MPEG rate values in the video stream is transmitted to the insertion point, which in one embodiment, is the statistical multiplexer 130. At the insertion point, the insertion device optimizes use of the avail bits, and profiles are created based on the ads which originate from offline encoders, with the statistical multiplexing process allowing optimal use of bits for the highest quality and full control over the images. The resulting profiles can be transmitted in the inserted rate control signal 140 or through use of the separate rate control signal 150.

In the blind profiling technique, the secondary insertion point 155, which in one embodiment is the retransmission point, utilizes the profiles of the original ads as the basis for compressing or re-compressing replacement ads, which will be forced to match the profiles of the original ads. One advantage of this technique is that it allows for the coexistence of both profiled and unconstrained ads in which the statistical multiplexer 130 accommodates the advertisement in its original form, using traditional statistical multiplexing techniques for compression. The profiles created by the first instance of compression can be piecewise linear profiles with the linear segments extending periods of one second or longer, minimum or maximum bit rate profiles, high granularity profiles which track the bandwidth allocated to the avail in increments ranging from a few milliseconds to one second or more, or total bit rate profiles.

Another advantage of blind profiling is that at the initial insertion point, the profile of the avail is only constrained by the statistical multiplexing process and not by a predetermined profile. Using this technique, it is possible for content providers to sell avails and insert the advertiser's material while insuring a high quality advertisement. The local broadcaster, using the profile generated by the initial insertion, can substitute the original advertisement with another advertisement which matches the profile. The substituted advertisement may have a profile which approximates that of the original advertisement, or may be compressed or re-compressed to match or approximate the profile of the original advertisement.

Although this invention has been illustrated by reference to specific embodiments, it will be apparent to those skilled in the art that various changes and modifications may be made which clearly fall within the scope of the invention. The invention is intended to be protected broadly within the scope of the appended claims.

## Claims

1. A method of inserting digital media advertisements into a statistically multiplexed digital transmission stream, comprising:
defining a first bit rate profile specifying a bit rate for data to be inserted into a first portion of the transmission stream over a first period;
defining a second bit rate profile specifying a bit rate for data to be inserted into a second portion of the transmission stream over a second period;
defining a profile for the compression of first and second advertisements which specifies a limit to the sum of the first bit rate profile and the second bit rate profile; and
compressing and inserting first and second advertisements having low and high bit rate sections into the first and second portions of the transmission stream respectively according to the compression profile;
wherein the first and second bit rate profiles are defined so as to optimise the transmission of the first and second advertisements by scheduling the positioning of high bit rate sections of the first and second advertisements in the transmission stream so that they do not occur simultaneously.

2. A method according to claim 1 wherein the first and second profiles are representable by a piecewise linear model.

3. A method according to claim 1 or claim 2, wherein the first and second periods occur simultaneously.

4. A method according to any one of claims 1 to 3, wherein the compression profile is based on the total number of bits from the start to the end of both the first and second periods.

5. A method according to any preceding claim, wherein the first bit rate profile is complementary to the second bit rate profile.

6. A method according to any preceding claim, wherein at least one of the first and second profiles specifies a maximum bit rate.

7. A method according to any preceding claim, wherein at least one of the first and second profiles specifies a minimum bit rate.

8. A method according to claim 7, wherein one or more null packets are inserted into the first or second portion of the transmission stream such that the sum of the specified minimum bit rate and the one or more null packets is equal to the bit rate specified by its corresponding profile.

9. A method according to any preceding claim wherein at least one of the first and second profiles specifies a total number of bits, bytes or packets in the corresponding portion of the transmission stream.

10. A method according to any preceding claim wherein at least one of the first and second profiles specifies instructions for inserting the corresponding advertisement into its corresponding portion of the transmission stream.

11. A method according to any preceding claim further comprising creating a portion in the transmission stream for receiving an advertisement.

12. A system for inserting digital media advertisements into a statistically multiplexed digital transmission stream, comprising:
a control means (120, 130) for defining a first bit rate profile specifying a bit rate for data inserted into a first portion of the transmission stream over a first period, and for defining a second bit rate profile specifying a bit rate for data to be inserted into a second portion of the transmission stream over a second period;
a compression means (160) for compressing first and second advertisements, having low and high bit rate sections, at a predetermined compression profile, wherein the control means (120, 130) is arranged to define the first and second bit rate profiles so that the bit rate of data in the transmission stream during the first and second portions satisfies a bit rate constraint specified in the compression profile;
an inserter (165) for inserting the first and second compressed advertisements into the first and second portions of the transmission stream respectively;
wherein the control means (120, 130) is arranged to define the first and second bit rate profiles so as to optimise the transmission of the first and second advertisements by scheduling the positioning of the high bit rate sections of the first and second advertisements in the transmission stream so that they do not occur simultaneously.

13. A system according to claim 12 wherein the time-varying profiles are representable by a piecewise linear model.

14. A system according to claim 12 or 13 wherein the first and second periods are arranged to occur simultaneously.

15. A system according to claim 12 or claim 13, wherein the compression profile is based on total number of bits from the start to the end of both the first and second periods.

16. A system according to any one of claims 12 to 15, wherein the first bit rate profile is complementary to the second bit rate profile.

17. A system according to any one of claims 12 to 16 wherein the compression means (160) is capable of compressing an advertisement at a predetermined maximum bit rate.

18. A system according to any one of claims 12 to 17, wherein the compression means (160) is capable of compressing an advertisement at a predetermined minimum bit rate.

19. A system according to claim 18, wherein the insertion means (165) is arranged to insert one or more null packets into the first or second portion of the transmission stream such that the sum of the minimum bit rate and the one or more null packets is equal to the bit rate specified by its corresponding profile.

20. A system according to any one of claims 12 to 19 wherein at least one of the first and second profiles is arranged specify a total number of bits, bytes or packets in the corresponding portion of the transmission stream.

21. A system according to any one of claims 12 to 20 wherein the insertion means (160) is operable to insert an advertisement into the transmission stream in response to instructions from the control means (120).

22. A system according to any of claims 12 to 21 wherein the control means (120, 130) is further arranged to creating a portion in the transmission stream for receiving an advertisement.

23. A statistical multiplexing unit (120) for use in a statistically multiplexed digital video environment having multiple statistically multiplexed program streams with one or more advertisement opportunities, the unit comprising:
a bandwidth monitoring utility for determining an available bandwidth for an advertisement in an advertising opportunity, wherein the bandwidth monitoring utility is arranged to communicate with one or more external devices to report the available bandwidth for the advertisement; and
an insertion system according to any one of claims 12 to 22 for inserting the advertisement in the advertising opportunity at the available bandwidth.

24. An advertisement insertion server for use in a statistically multiplexed digital video environment having multiple statistically multiplexed program streams with one or more advertisement opportunities, the server comprising:
a storage medium for storing one or more digital advertisements;
a rate control interface for receiving one or more rate control instructions; and
an insertion system according to any of claims 12 to 22 which provides insertion rate control signal generation mechanism for generating one or more insertion rate control signals from the one or more rate control instructions, wherein the rate control signals are used for controlling advertisement insertion into the one or more advertisement opportunities in the one or more statistically multiplexed program streams according to the method of any of claims 1 to 11.

## Patentansprüche

1. Verfahren zum Einfügen digitaler Medienanzeigen in einen statistisch multiplexierten Digitalübertragungsstrom, umfassend:
Definieren eines ersten Bitratenprofils, das eine Bitrate für die Daten festlegt, die in einen ersten Abschnitt des Übertragungsstroms über eine erste Periode eingefügt werden sollen;
Definieren eines zweiten Bitratenprofils, das eine Bitrate für Daten festlegt, die in einen zweiten Abschnitt des Übertragungsstroms über eine zweite Periode eingefügt werden sollen;
Definieren eines Profils für die Kompression erster und zweiter Anzeigen, das eine Grenze der Summe des ersten Bitratenprofils und des zweiten Bitratenprofils festlegt; und
Komprimieren sowie Einfügen erster und zweiter Anzeigen, die niedrige und hohe Bitratenabschnitte haben in den ersten bzw. den zweiten Abschnitt des Übertragungsstroms gemäß dem Kompressionsprofil;
wobei das erste und das zweite Bitratenprofil so definiert werden, dass sie die Übertragung der ersten und der zweiten Anzeige optimieren, indem sie die Positionierung der Abschnitte hoher Bitrate der ersten und der zweiten Anzeige im Übertragungsstrom derart zeitlich planen, dass sie nicht gleichzeitig auftreten.

2. Verfahren nach Anspruch 1, bei dem das erste und das zweite Profil durch ein stückweises lineares Modell dargestellt werden können.

3. Verfahren nach Anspruch 1 oder Anspruch 2, bei dem die erste und die zweite Periode gleichzeitig auftreten.

4. Verfahren nach einem der Ansprüche 1 bis 3, bei dem das Kompressionsprofil auf der Gesamtzahl von Bits vom Beginn bis zum Ende sowohl der ersten als auch der zweiten Periode basiert.

5. Verfahren nach einem der vorhergehenden Ansprüche, bei dem das erste Bitratenprofil komplementär zum zweiten Bitratenprofil ist.

6. Verfahren nach einem der vorhergehenden Ansprüche, bei dem das erste und/oder das zweite Profil eine maximale Bitrate festlegt.

7. Verfahren nach einem der vorhergehenden Ansprüche, bei dem das erste und/oder das zweite Profil eine minimale Bitrate festlegt.

8. Verfahren nach Anspruch 7, bei dem wenigstens ein Nullpaket in den ersten oder den zweiten Abschnitt des Übertragungsstroms derart eingefügt wird, dass die Summe der festgelegten minimalen Bitrate und des wenigstens einen Nullpaketes gleich der Bitrate ist, die durch ihr entsprechendes Profil festgelegt wird.

9. Verfahren nach einem der vorhergehenden Ansprüche, bei dem des erste und/oder das zweite Profil eine Gesamtzahl von Bits, Bytes oder Paketen im entsprechenden Abschnitt des Übertragungsstroms festlegt.

10. Verfahren nach einem der vorhergehenden Ansprüche, bei dem das erste und/oder das zweite Profil Befehle zum Einfügen der entsprechenden Anzeige in ihren entsprechenden Abschnitt des Übertragungsstroms festlegt.

11. Verfahren nach einem der vorhergehenden Ansprüche, weiterhin enthaltend das Erzeugen eines Abschnittes im Übertragungsstrom für das Empfangen einer Anzeige.

12. System zum Einfügen digitaler Medienanzeigen in einen statistisch multiplexierten Digitalübertragungsstrom, enthaltend:
eine Steuereinrichtung (120, 130) zum Definieren eines ersten Bitratenprofils, das eine Bitrate für Daten festlegt, die in einen ersten Abschnitt des Übertragungsstroms über eine erste Periode eingefügt werden sollen, und zum Definieren eines zweiten Bitratenprofils, das eine Bitrate für Daten festlegt, die in einen zweiten Abschnitt des Übertragungsstroms über eine zweite Periode eingefügt werden sollen;
eine Kompressionseinrichtung (160) zum Komprimieren erster und zweiter Anzeigen, die Abschnitte niedriger und hoher Bitraten haben, mit einem vorbestimmten Kompressionsprofil, wobei die Steuereinrichtung (120, 130) dazu eingerichtet ist, das erste und das zweite Bitratenprofil derart zu definieren, dass die Bitrate von Daten im Übertragungsstrom während des ersten und des zweiten Abschnittes eine Bitratenbeschränkung erfüllt, die im Kompressionsprofil festgelegt ist; eine Einfügeeinrichtung (165) zum Einfügen der ersten und der zweiten komprimierten Anzeige in den ersten bzw. den zweiten Abschnitt des Übertragungsstroms;
wobei die Steuereinrichtung (120, 130) dazu eingerichtet ist, das erste und das zweite Bitratenprofil derart zu definieren, dass es die Übertragung der ersten und der zweiten Anzeige optimiert, indem sie die Positionierung der Abschnitte hoher Bitrate der ersten und der zweiten Anzeige im Übertragungsstrom derart zeitlich plant, dass sie nicht gleichzeitig auftreten.

13. System nach Anspruch 12, bei dem die zeitlich variierenden Profile durch ein stückweises lineares Modell dargestellt werden können.

14. System nach Anspruch 12 oder 13, bei dem die erste und die zweite Periode so angeordnet sind, dass sie gleichzeitig auftreten.

15. System nach Anspruch 12 oder 13, bei dem das Kompressionsprofil auf der Gesamtzahl von Bits vom Beginn bis zum Ende sowohl der ersten als auch der zweiten Periode basiert.

16. System nach einem der Ansprüche 12 bis 15, bei dem das erste Bitratenprofil komplementär zum zweiten Bitratenprofil ist.

17. System nach einem der Ansprüche 12 bis 16, bei dem die Kompressionseinrichtung (160) in der Lage ist, eine Anzeige mit einer vorbestimmten maximalen Bitrate zu komprimieren.

18. System nach einem der Ansprüche 12 bis 17, bei dem die Kompressionseinrichtung (160) in der Lage ist, eine Anzeige mit einer vorbestimmten minimalen Bitrate zu komprimieren.

19. System nach Anspruch 18, bei dem die Einfügeeinrichtung (165) dazu eingerichtet ist, wenigstens ein Nullpaket in den ersten oder den zweiten Abschnitt des Übertragungsstroms derart einzufügen, dass die Summe der minimalen Bitrate und des wenigstens einen Nullpaketes gleich der Bitrate ist, die durch ihr entsprechendes Profil festgelegt ist.

20. System nach einem der Ansprüche 12 bis 19, bei dem das erste und/oder das zweite Profil dazu eingerichtet ist, eine Gesamtzahl von Bits, Bytes oder Paketen im entsprechenden Abschnitt des Übertragungsstroms festzulegen.

21. System nach einem der Ansprüche 12 bis 20, bei dem die Einfügeeinrichtung (160) so betrieben werden kann, dass sie eine Anzeige in den Übertragungsstrom in Erwiderung auf Anweisungen von der Steuereinrichtung (120) einfügt.

22. System nach einem der Ansprüche 12 bis 21, bei dem die Steuereinrichtung (120, 130) weiterhin dazu eingerichtet ist, einen Abschnitt im Übertragungsstrom zum Empfangen einer Anzeige zu erzeugen.

23. Statistische Multiplexiereinheit (120) für die Verwendung in einer statistisch multiplexierten Digitalvideoumgebung, die über mehrere statistisch multiplexierte Programmströme mit wenigstens einer Anzeigegelegenheit verfügt, wobei die Einheit enthält:
ein Bandbreitenüberwachungswerkzeug zum Bestimmen einer verfügbaren Bandbreite für eine Anzeige in einer Anzeigengelegenheit, wobei das Bandbreitenüberwachungswerkzeug dazu eingerichtet ist, mit wenigstens einer überwachungswerkzeug dazu eingerichtet ist, mit wenigstens einer externen Vorrichtung zu kommunizieren, um die verfügbare Bandbreite für die Anzeige mitzuteilen; und
ein Einfügesystem nach einem der Ansprüche 12 bis 22 zum Einfügen der Anzeige in die Anzeigegelegenheit bei der verfügbaren Bandbreite.

24. Anzeigeeinfügeserver für die Verwendung in einer statistisch multiplexierten Digitalvideoumgebung, die über mehrere statistisch multiplexierte Programmströme mit wenigstens einer Anzeigegelegenheit verfügt, wobei der Server enthält:
ein Speichermedium zum Speichern wenigstens einer digitalen Anzeige;
eine Ratensteuerschnittstelle zum Empfangen wenigstens eines Ratensteuerbefehls;
und ein Einfügesystem nach einem der Ansprüche 12 bis 22, das einen Einfügeratensteuersignal-Erzeugungsmechanismus zum Erzeugen wenigstens eines Einfügeratensteuersignals aus dem wenigstens einen Ratensteuerbefehl bereitstellt, wobei die Ratensteuersignale verwendet werden, um das Einfügen der Anzeige in die wenigstens eine Anzeigegelegenheit in den wenigstens einen statistisch multiplexierten Programmstrom gemäß dem Verfahren nach einem der Ansprüche 1 bis 11 zu steuern.

## Revendications

1. Procédé pour insérer des messages publicitaires sur support numérique dans un flux de transmission numérique multiplexé statistiquement, comportant les étapes consistant à :
définir un premier profil de débit binaire spécifiant un débit binaire pour des données à insérer dans une première partie du flux de transmission sur une première période,
définir un second profil de débit binaire spécifiant un débit binaire pour des données à insérer dans une seconde partie du flux de transmission sur une seconde période,
définir un profil pour la compression des premier et second messages publicitaires qui spécifie une limite à la somme du premier profil de débit binaire et du second profil de débit binaire, et
compresser et insérer des premier et second messages publicitaires ayant des sections à débit binaire faible et élevé dans les première et seconde parties du flux de transmission respectivement conformément au profil de compression,
dans lequel les premier et second profils de débit binaire sont définis de manière à optimiser la transmission des premier et second messages publicitaires en planifiant le positionnement des sections à débit binaire élevé des premier et second messages publicitaires dans le flux de transmission de sorte qu'ils ne surviennent pas simultanément.

2. Procédé selon la revendication 1, dans lequel les premier et second profils peuvent être représentés par un modèle linéaire relatif à des éléments.

3. Procédé selon la revendication 1 ou la revendication 2, dans lequel les première et seconde périodes surviennent simultanément.

4. Procédé selon l'une quelconque des revendications 1 à 3, dans lequel le profil de compression est basé sur le nombre total de bits depuis le début jusqu'à la fin à la fois de la première période et de la seconde période.

5. Procédé selon l'une quelconque des revendications précédentes, dans lequel le premier profil de débit binaire est complémentaire du second profil de débit binaire.

6. Procédé selon l'une quelconque des revendications précédentes, dans lequel au moins l'un des premier et second profils spécifie un débit binaire maximum.

7. Procédé selon l'une quelconque des revendications précédentes, dans lequel au moins l'un des premier et second profils spécifie un débit binaire minimum.

8. Procédé selon la revendication 7, dans lequel un ou plusieurs paquets nuls sont insérés dans la première ou la seconde partie du flux de transmission de sorte que la somme du débit binaire minimum spécifié et du ou des paquets nuls est égale au débit binaire spécifié par son profil correspondant.

9. Procédé selon l'une quelconque des revendications précédentes, dans lequel au moins l'un des premier et second profils spécifie un nombre total de bits, d'octets ou de paquets dans la partie correspondante du flux de transmission.

10. Procédé selon l'une quelconque des revendications précédentes, dans lequel au moins l'un des premier et second profils spécifie des instructions pour insérer le message publicitaire correspondant dans sa partie correspondante du flux de transmission.

11. Procédé selon l'une quelconque des revendications précédentes, comportant en outre l'étape consistant à créer une partie du flux de transmission pour recevoir un message publicitaire.

12. Système pour insérer des messages publicitaires sur support numérique dans un flux de transmission numérique multiplexé statistiquement, comportant :
des moyens de commande (120, 130) pour définir un premier profil de débit binaire spécifiant un débit binaire pour des données à insérer dans une première partie du flux de transmission sur une première période et pour définir un second profil de débit binaire spécifiant un débit binaire pour des données à insérer dans une seconde partie du flux de transmission sur une seconde période,
des moyens de compression (160) pour compresser des premier et second messages publicitaires, ayant des sections à débit binaire faible et élevé, à un profil de compression prédéterminée, dans lequel les moyens de commande (120, 130) sont conçus pour définir les premier et second profils de débit binaire de sorte que le débit binaire de données dans le flux de transmission pendant les première et seconde parties satisfait à une contrainte de débit binaire spécifiée dans le profil de compression,
un dispositif d'insertion (165) pour insérer les premier et second messages publicitaires compressés dans les première et seconde parties du flux de transmission respectivement,
dans lequel les moyens de commande (120, 130) sont conçus pour définir les premier et second profils de débit binaire de manière à optimiser la transmission des premier et second messages publicitaires en planifiant le positionnement des sections à débit binaire élevé des premier et second messages publicitaires dans le flux de transmission de sorte qu'ils ne surviennent pas simultanément.

13. Système selon la revendication 12, dans lequel les profils variant au fil du temps peuvent être représentés par un modèle linéaire relatif à des éléments.

14. Système selon la revendication 12 ou 13, dans lequel les première et seconde périodes sont conçues pour survenir simultanément.

15. Système selon la revendication 12 ou la revendication 13, dans lequel le profil de compression est basé sur un nombre total de bits depuis le début jusqu'à la fin à la fois de la première période et de la seconde période.

16. Système selon l'une quelconque des revendications 12 à 15, dans lequel le premier profil de débit binaire est complémentaire du second profil de débit binaire.

17. Système selon l'une quelconque des revendications 12 à 16, dans lequel les moyens de compression (160) sont capables de compresser un message publicitaire à un débit binaire maximum prédéterminé.

18. Système selon l'une quelconque des revendications 12 à 17, dans lequel les moyens de compression (160) sont capables de compresser un message publicitaire à un débit binaire minimum prédéterminé.

19. Système selon la revendication 18, dans lequel les moyens d'insertion (165) sont conçus pour insérer un ou plusieurs paquets nuls dans la première ou la seconde partie du flux de transmission de sorte que la somme du débit binaire minimum et du ou des paquets nuls est égale au débit binaire spécifié par son profil correspondant.

20. Système selon l'une quelconque des revendications 12 à 19, dans lequel au moins l'un des premier et second profils est conçu pour spécifier un nombre total de bits, d'octets ou de paquets dans la partie correspondante du flux de transmission.

21. Système selon l'une quelconque des revendications 12 à 20, dans lequel les moyens d'insertion (160) sont opérationnels pour insérer un message publicitaire dans le flux de transmission en réponse à des instructions provenant des moyens de commande (120).

22. Système selon l'une quelconque des revendications 12 à 21, dans lequel les moyens de commande (120, 130) sont en outre conçus pour créer une partie du flux de transmission en vue de recevoir un message publicitaire.

23. Unité de multiplexage statistique (120) à utiliser dans un environnement vidéo numérique multiplexé statistiquement ayant de multiples flux de programmes multiplexés statistiquement avec une ou plusieurs opportunités de publicité, l'unité comportant :
un utilitaire de surveillance de largeur de bande pour déterminer une largeur de bande disponible pour un message publicitaire dans l'opportunité de publicité, l'utilitaire de surveillance de largeur de bande étant conçu pour communiquer avec un ou plusieurs dispositifs externes pour rapporter la largeur de bande disponible pour le message publicitaire, et
un système d'insertion selon l'une quelconque des revendications 12 à 22 pour insérer le message publicitaire dans l'opportunité de publicité à la largeur de bande disponible.

24. Serveur d'insertion de message publicitaire à utiliser dans un environnement vidéo numérique multiplexé statistiquement ayant de multiples flux de programmes multiplexés statistiquement avec une ou plusieurs opportunités de publicité, le serveur comportant :
un support de mémorisation pour mémoriser un ou plusieurs messages publicitaires numériques,
une interface de commande de débit pour recevoir une ou plusieurs instructions de commande de débit, et
un système d'insertion selon l'une quelconque des revendications 12 à 22 qui fournit un mécanisme de génération de signal de commande de débit d'insertion pour générer un ou plusieurs signaux de commande de débit d'insertion depuis la ou les instructions de commande de débit, dans lequel les signaux de commande de débit sont utilisés pour commander l'insertion de message publicitaire dans l'opportunité ou les opportunités de publicité du ou des flux de programme multiplexé statistiquement conformément au procédé selon l'une quelconque des revendications 1 à 11.
